# EUROPEAN PATENT APPLICATION

(11) **EP 1 707 336 A1**
(43) Date of publication of application: **04.10.2006**
(21) Application number: 05090079.4
(22) Date of filing: 30.03.2005
(51) Int. Cl.: B29C 45/14, B60R 13/02

(54) **Automotive interior trim component and method for manufacturing the same**

(71) Applicant: Kasai Kogyo Co., Ltd., Kanagawa 253-0106 (JP)
(72) Inventor: Masumizi, Kaname, c/o Kasai Kogyo Co., Ltd., Kouza-gun, Kanagawa-ken (JP); Koike, Noriyuki, c/o Kasai Kogyo Co., Ltd., Kouza-gun, Kanagawa-ken (JP)
(74) Representative: Hengelhaupt, Jürgen

(57) **Abstract**

There are provided an automotive interior component, in which a decreased weight and a reduced cost are achieved and safety measures at the time of side collision is taken, and a method for manufacturing the automotive interior component. A door trim main body 20 of a door trim 10 is made up of a foamed resin base material 21 having a light weight and shape holding properties and a resin mold portion 23 integrated with a part of the inside surface side of the foamed resin base material 21. A resin flash is leaked intentionally and forcedly around a part of the resin mold portion 23 to form a reinforcing flash portion 30. Thereby, the resin mold portion 23 is supported firmly, and a sharp edge of the resin mold portion 23 is avoided by the reinforcing flash portion 30 at the time of side collision. Also, the molding accuracy is increased by producing the reinforcing flash portion 30 intentionally and forcedly.

## Description

### BACKGROUND OF THE INVENTION

### Field of the Invention

The present invention relates to an automotive interior component such as a door trim, a rear parcel shelf, a floor trim, a trunk trim, and a rear side trim, and a method for manufacturing the same. More particularly, it relates to an automotive interior component in which the weight thereof can be made light, the component can be manufactured at a low cost, the molding accuracy of resin-made component can be increased, and moreover the safety thereof can be improved, and a method for manufacturing it.

### Description of the Related Art

A construction of an automotive interior component will be explained by taking a door trim as an example with reference to FIGS . 16 and 17 . The door trim 1 is constructed by integrally laminating a surface skin member 3 having a good surface appearance on the surface of a resin core member 2 which is provided over almost the whole of product surface having shape holding properties and rigidity for the mounting to a vehicle body panel. As the material of the resin core member 2, a polypropylene resin in which talc is mixed is used. The surface skin member 3 in itself has no shape holding properties, and is formed by using a laminated sheet material in which a cushioning material such as polyethylene foam is laminated on the back surface of a synthetic resin sheet such as a PVC (polyvinylchroride) sheet. In recent years, a laminated sheet material in which a cushioning material such as polyethylene foam is laminated on the back surface of an elastomer sheet such as a TPO (thermoplastic olefin) sheet tends to be often used in view of the requirement of environment and recycling.

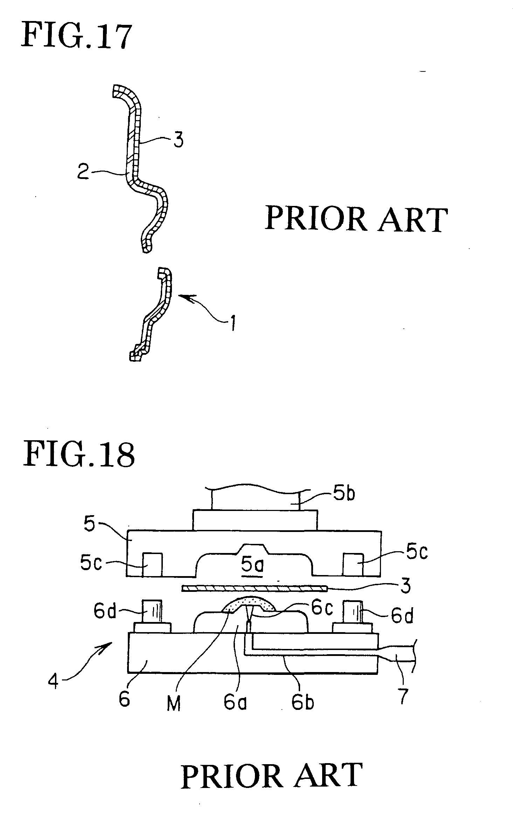

Next, a conventional example of a molding method for the door trim 1 will be explained with reference to FIG. 18. A mold press forming die assembly 4 for molding the door trim 1 is substantially consisted of a forming upper die half 5 movable vertically with a predetermined stroke, a fixed resin core half 6, and an injection device 7 connected to the forming lower die half6. In order to provide the product shape of the door trim 1 when the upper die 5 and lower die 6 are clamped, a cavity portion 5a is formed in the upper die 5, while a core portion 6a is provided in the lower die 6. To move the upper die 5 vertically with the predetermined stroke, the forming upper die 5 is connected with an elevating cylinder 5b, and the forming lower die 6 is provided with a manifold 6b and a gate 6c, which form a passage for providing molten resin from the injection device 7. Also, to keep a proper posture of the upper die 5 moving vertically, guide posts 6d are provided at four corners of the forming lower die 6, and guide bushes 5c are provided in the upper die 5 so as to correspond to the guide posts 6d.

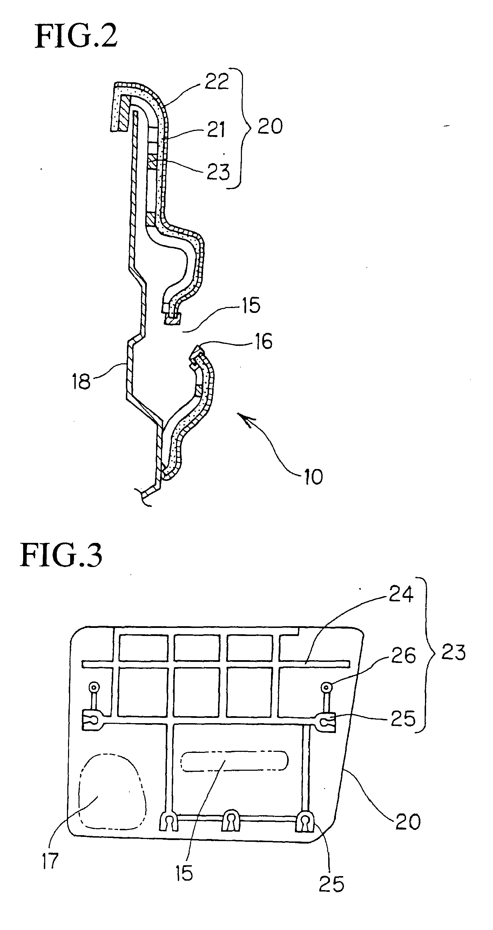

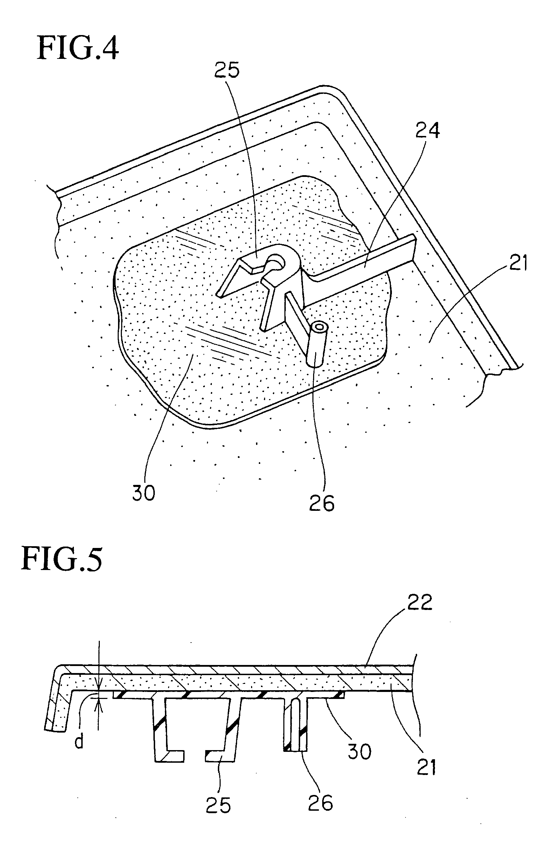

Therefore, when the forming upper and lower dies 5, 6 are in a open state, the surface skin member 3 is set between the dies, and subsequently just before the forming upper and lower dies 5, 6 are clamped or after they have been clamped, molten resin M is injected and charged from the injection device 7 into a product cavity between the upper and lower dies 5, 6 through the manifold 6b and the gate 6c. Thereby, the resin core member 2 is molded into a predetermined shape, and also the surface skin member 3 is integrally formed on the surface of the resin core member 2 (refer to Japanese Patent Laid-Open No. 10-138268 (p. 2, Figures 3 and 4), for example). In FIG. 18, for convenience of explanation, the molten resin M is supplied in an open state onto the die surface of the core portion 6a. However, as described above, the molten resin M may be injected and charged into the cavity after the forming upper and lower dies 5, 6 have been clamped.

However, the conventional door trim 1 has a problem in that since the projected area of the resin core member 2 is large, the material cost is high and the product is heavy in weight. Also, since the projected area of the resin core member 2 is large, the injection pressure at the time of molding must inevitably be made high, so that a die construction capable of withstanding the high injection pressure is required, and hence the die manufacturing cost increases. Moreover, since a large quantity of molten resin is cooled and solidified, the molding cycle is prolonged, which becomes a major cause for decreasing the productivity.

### SUMMARY OF THE INVENTION

The present invention has been made in view of the above problems, and accordingly an object thereof is to provide an automotive interior component which can reduce the weight and achieve high rigidity and a low cost, and to provide an automotive interior component which is integrated with a resin mold portion and improving molding performance and safety, and a method for manufacturing the same.

To solve the above problems, as a result of earnest studies, the inventors of the present invention came to complete the present invention by paying attention to the fact that a foamed resin sheet, which has conventionally been used as a surface skin member, is provided with a function as a core member by giving shape holding properties to it; a resin rib having high rigidity is arranged in a location where higher rigidity is needed, namely, a location where a peripheral edge portion of product or a panel can be brought into close contact with the mating component in the fitting portion or a fixed clearance is secured, or in a location where a component is mounted and a location where a load is applied; in a location where an interior component is attached to the panel, a clip mounting seat etc. are disposed, and a resin mold portion such as the resin rib or the clip mounting seat is limitedly provided, by which the weight can be reduced as compared with a conventional resin core member having a large projected area; and in particular, a disadvantage that a flash occurs around the resin mold portion when molten resin is supplied into a concave portion in a molding die to mold the resin mold portion is inversely utilized, by which the support strength of resin mold portion can be enhanced by the flash, and by producing the flash forcedly, the molding accuracy can inversely be increased.

Specifically, the automotive interior component in accordance with the present invention, comprising an interior trimmain body (20) consisting of a foamed resin base material (21), which is formed into a required shape and has a light weight and shape holding properties, and a resin mold portion (23), which is integrated with a part of the back surface of the foamed resin base material (21), is characterized in that the resin mold portion of the interior trim main body is integrated with the back surface of foamed resin base material by injection charging molten resin into a concave portion in a forming lower die, and a thin reinforcing flash portion is formed at least in a part around the resin mold portion by leaking the molten resin to the outside intentionally and forcedly.

The automotive interior component can be used for a door trim, a rear parcel shelf, a floor trim, a luggage trim, a trunk trim, a rear side trim, a roof trim, and the like. Also, for the foamed resin base material constituting a part of the interior trim main body , in the case where its shape is close to a flat shape, a process of softening by heat is omitted, and the foamed resin base material is molded into a desired shape by using a molding die. However, in the case where the foamed resin base material is applied to a product of a three-dimensional shape, after the foamed resin sheet has been softened by heat, the foamed resin base material is molded into a required curved shape in the molding die, by which its shape is held. The term "shape holding properties" means that there is provided rigidity of a degree such as to hold the shape when the product is removed from the die after molding even if a reinforcing member such as a rib is absent. Also, in the case where the product shape includes a part having high rate of expansion , after the foamed resin sheet has been softened by heat, a vacuum attraction force may be applied to the foamed resin sheet along the inside surface of the molding die by providing a vacuum attraction mechanism in the molding die.

As the foamed resin sheet, a material in which a foaming agent is added to a thermoplastic resin is used. The thermoplastic resin may be of one kind or may be of two or more kinds. Preferably, polyethylene resins, polypropylene resins, polystyrene resins, polyethylene terephthalate resins, polyvinyl alcohol resins, vinyl chloride resins, polyamide resins, polyacetal resins, polycarbonate resins, ionomer resins,acrylonitrile-butadiene-styrene(ABS)resins, or the like can be used. As the foaming agent, an organic foaming agent such as an azo compound, a sulfohydrazide compound, a nitroso compound, and azido compound, or an inorganic foaming agent such as sodium bicarbonate can be used. When a balance between weight and strength of product is taken into account, the foamed resin base material molded into a required shape after the foamed resin sheet has been softened by heat preferably has an expansion ratio of 2 to 10 times to the original. The cell diameter of the foamed resin base material at this time is preferably in the range of 0.1 µm to 2.0 mm. The thickness thereof should be 0.5 to 30 mm, preferably 1 to 10 mm.

On the other hand, the thermoplastic resin material used as the resin mold portion can be selected appropriately from wide-ranging thermoplastic resins. As a thermoplastic resin usually used preferably, polyethylene resins, polypropylene resins, polystyrene resins, polyethylene terephthalate resins, polyvinyl alcohol resins, vinyl chloride resins, polyamide resins, polyacetal resins, polycarbonate resins, ionomer resins, acrylonitrile-butadiene-styrene (ABS) resins, and the like can be used. Also, various kinds of fillers may be mixed in the thermoplastic resin. As the filler capable of being used, inorganic fiber such as glass fiber or carbon fiber, or inorganic particles such as talc, clay, silica, or calcium carbonate may be used. Also, various kinds of additives such as an oxidation inhibitor, an ultraviolet absorbent, a colorant, a flame retarder, and a shrinkage reducing agent may be blended.

To enhance appearance design properties, a surface skin member having ornamental function may be integrally laminated on the surface of the foamed resin base material. The surface skin member having ornamental function can be used as a mode of a synthetic resin sheet such as a TPO sheet, a thermoplastic urethane (hereinafter referred to as TPU) sheet, or a vinyl chloride sheet, or a fabric sheet such as a woven fabric, a nonwoven fabric, or a braided fabric, or a synthetic resin film, or a single sheet such as a foamed body or a netting material, or can be used as a mode of a laminated sheet material in which the back surface of a synthetic resin sheet or a fabric sheet is lined with a cushioning layer such as polyethylene foam, polypropylene foam, or polyurethane foam. The material forming the surface skin member having ornamental function is not subject to any special restriction. However, a material having air permeability such as a woven fabric, a nonwoven fabric, or a braided fabric is preferably used to make the best use of sound absorbing properties of the foamed resin base material.

In addition, an interior component having excellent sound absorbing properties can be obtained by the porous sound absorbing function of the foamed resin base material, and also when a polyolefin resin is used as the foamed resin basematerial and a material for the resin rib, all the materials are unified by an olefin resin material. Therefore, the separation process can be omitted, and recycling work can be simplified.

The resin mold portion is integrated with a part on the inside surface side of the foamed resin base material. The resin mold portion corresponds to the lattice-shaped resin rib selected from the longitudinal and transverse direction, the diagonal direction, and a combination of these directions, the clip mounting seat for mounting a clip for attaching the interior trim to a panel, a bracket for attaching various kinds of components to the interior trim, and the like. Further, the reinforcing flash portion provided connectingly with at least a part around the resin mold portion preferably has a thickness of 0.5 to 1.0 mm when the thicknesses of the resin rib, the clip mounting seat, and the like are set at 1.5 to 2.5 mm.

According to the automotive interior component in accordance with the present invention, the interior trim main body is configured so that the resin mold portion is integrated with a part of the back surface of the foamed resin base material having shape holding properties, so that the conventional resin core member can be eliminated. Therefore, by eliminating the conventional resin core member having a very large projected area, the weight of product can be reduced, and moreover, the reduction in material cost can be achieved because the resin material can be saved. Further, since a reinforcing flash portion is integrated with the resin mold portion, such as the clip mounting seat and the resin rib, which is integrated with a part of the back surface of the foamed resin base material, when a load is applied to the resin mold portion, since the resin mold portion is supported by the reinforcing flash portion around it, the resin mold portion is less liable to be broken, and even if it is broken, a sharp edge will not protrude on the product surface side.

In a preferred embodiment of the automotive interior component in accordance with the present invention, the automotive interior component which is configured so that a functional component is mounted, if desired, on the interior trim main body consisting of the foamed resin base material, which is formed into a required shape and has a light weight and shape holding properties, and the resin mold portion, which is integrated with a part of the back surface of the foamed resin base material, is characterized in that the functional component is housed and fixed in a mounting opening in the interior trim main body , and the resin rib substantially intersecting with an edge line of a corner edge of the functional component is formed on the inside surface side of the foamed resin base material so as to correspond to the corner edge.

Also, in another preferred embodiment of the automotive interior component in accordance with the present invention, the automotive interior component which is configured so that a functional component is mounted, if desired, on the interior trim main body consisting of the foamed resin base material, which is formed into a required shape and has a light weight and shape holding properties, and the res in mold portion, which is integrated with a part of the back surface of the foamed resin base material, is characterized in that the functional component is housed and fixed in a mounting opening in the interior trim main body , and the thin reinforcing flash portion that receives an edge line of the corner edge of the functional component is formed on the inside surface side of the foamed resin base material so as to correspond to the corner edge by intentionally and forcedly exposing molten resin to the outside.

As the functional component attached to the interior trim main body , a switch unit incorporating a switch mechanism such as a pull handle escutcheon and a power window switch and the like can be cited, and a mode for fitting and fixing the functional component in the mounting opening in the door trim main body can be applied. According to this embodiment, the interior trim main body can be made light in weight and low in cost. Also, when a load is applied to the surface of the interior component from the outside, since the corner edge of the functional component is in contact with the resin rib in a substantially intersecting form, or faces to the whole surface of the reinforcing flash portion, the buffering action of the resin rib and the reinforcing flash portion can be anticipated. Therefore, even if a shock is applied due to side collision etc., the edge line of corner edge of the functional component will not break through the interior trim main body.

The manufacturing method for the automotive interior component in accordance with the present invention, which is used to manufacture an automotive interior component configured so that a functional component is mounted, if desired, on the interior trim main body consisting of the foamed resin base material, which is formed into a required shape and has a light weight and shape holding properties, and the resin mold portion, which is integrated with a part of the back surface of the foamed resin base material, is characterized in that a raw material sheet, which is a raw material for the foamed resin base material, is provided between molding upper and lower dies that is in an open state after being softened by heat, and the molding dies are clamped to mold the foamed resin base material into a required shape along the cavity shape; molten resin is injection charged into the concave portion in the molding lower die just before the molding die is clamped or after the molding dies has been clamped to integrate the resin mold portion with the inside surface of the foamed resin base material; and the molten resin is leaked to the outside intentionally and forcedly to form the thin plate shaped reinforcing flash portion at least in a part around the resin mold portion connectingly with the base part of the resin mold portion.

The molding die used in the manufacturing method in accordance with the present invention is made up of a forming upper die capable of moving vertically with a predetermined stroke, a fixed-side forming lower die located under the forming upper die, and an injection device connected to the forming lower die. Molten resin supplied from the injection device is fed to the die surface of the forming lower die, specifically, into a groove formed in the die surface of the forming lower die through a manifold, a gate, and the like provided in the forming lower die. The molten resin may be injection charged into the groove provided in the die surface of the forming lower die by a predetermined injection pressure after the forming upper die has been lowered to the bottom dead center and the molding upper and lower dies have been clamped. However, the molten resin may be injection charged before the molding upper and lower dies are clamped.

Therefore, the foamed resin sheet is molded into a desired curved shape along the die surface shape of the molding die by the clamping of the molding upper and lower dies, and further the molten resin is injection charged, by which the resin rib is integrally laminated in a part of the back surface of the foamed resin base material. At this time, the foamed resin sheet is set in the molding die after being softened by heat using a heater etc. in the preceding process. The resin rib should be integrally laminated on the back surface of the foamed resin base material simultaneously with the molding of the foamedresinbasematerial. In the case where the final product shape is provided with a part having high rate of expansion, the molding die is clamped a plurality of times, and the molten resin should be injection charged in the final clamping process. Also, in the case where the final product shape is provided with a part having high rate of expansion, a vacuum attraction mechanism is provided in the forming upper die, and the foamed resin base material should be molded into a required shape along the die surface of the forming upper die by a vacuum attraction force.

According to the method in accordance with the present invention, only the resin mold portion having a lightening construction is molded as compared with the conventional resin core member having a large projected area. Therefore, a load of molding die can be reduced, and also the quantity of resin is decreased, so that the material cost can be reduced. Moreover, the cooling time can be shortened as compared with the conventional resin core member, so that the molding cycle of product can be shortened.

Furthermore, when molten resin is injection charged into the concave portion in the forming lower die to mold the resin mold portion after the molding dies has been closed, the molten resin is leaked to the outside of the concave portion intentionally and forcedly to form the thin reinforcing flash portion. Therefore, the sealing construction for securing airtightness at the peripheral edge of concave portion in the mold lower die, namely, in the peripheral edge portion of the resin mold portion need not be controlled precisely, so that restrictions of die fabrication, molding conditions, etc. can be relaxed, and a short shot in the resin mold portion can be avoided.

As described above, according to the present invention, since the interior trim main body constituting the automotive interior component is made up of the foamed resin base material having a light weight and shape holding properties and the resin mold portion integrated with a part of the back surface of the foamed resin base material, the conventional resin core member having a heavy weight can be eliminated. Therefore, the present invention achieves an effect of being capable of providing an automotive interior component that is light in weight and low in cost and has excellent sound absorbing performance because it is formed by a porous material.

Also, according to the present invention, since the interior trim main body is configured so that the resin mold portion is integrated with a part of the back surface of the foamed resin base material, and the projected area of the resin mold portion is very small as compared with the conventional resin core member, a load imposed on the molding die is low, the cooling time can be shortened, and the yield can be increased. Therefore, the present invention achieves an effect of being capable of enhancing the work efficiency and significantly reducing the cost.

Further, according to the present invention, since the resin mold portion integrated with a part on the inside surface side of the foamed resin base material constituting the interior trim main body is configured so that the reinforcing flash portion is integrated around at least a part thereof, even if a load is applied, the resin mold portion will not be broken due to the supporting function of the reinforcing flash portion. Even if the resin mold portion is broken, a sharp edge can be avoided effectively due to the presence of the reinforcing flash portion. Also, since the flash portion is molded forcedly around the resin mold portion, variations in the amount of resin supplied to the cavity can be accommodated by the flash portion. Moreover, the sealing ability of the peripheral edge of concave portion in the molding lower die is not required so much. Therefore, the present invention achieves an effect of being capable of carrying out die control easily and relaxing the restrictions imposed on the molding conditions.

### BRIEF DESCRIPTION OF THE DRAWINGS

FIG. 1 is a front view of an automotive door trim to which a first embodiment of an automotive interior component in accordance with the present invention is applied;
FIG. 2 is a sectional view taken along the line II-II of FIG. 1;
FIG. 3 is an explanatory view showing an arrangement pattern of a resin rib in the door trim shown in FIG. 1;
FIG. 4 is an explanatory view showing a clip mounting seat, which is a resin mold portion, and a reinforcing flash portion around the clip mounting seat in the door trim shown in FIG. 1;
FIG. 5 is a sectional view showing the clip mounting seat and the reinforcing flash portion shown in FIG. 4;
FIG. 6 is a general view showing a construction of a molding die used for molding a door trim main body in the door trim shown in FIG. 1;
FIG. 7 is a sectional view of a principal portion, showing a location corresponding to a reinforcing flash portion in the molding die showing in FIG. 6;
FIG. 8 is an explanatory view showing a setting process for a material in a manufacturing method for a door trim main body in the door trim shown in FIG. 1;
FIG. 9 is an explanatory view showing a molding process in a manufacturing method for a door trim main body in the door trim shown in FIG. 1;
FIG. 10 is an explanatory view showing a molding process for a reinforcing flash portion in a manufacturing method for a door trim main body in the door trim shown in FIG. 1;
FIG. 11 is a perspective view showing a second embodiment to which an automotive interior component in accordance with the present invention is applied to a door trim;
FIG. 12 is a sectional view taken along the line XII-XII of FIG. 11;
FIG. 13 is an explanatory view showing a resin mold portion and a reinforcing flash portion in the door trim shown in FIG. 11;
FIG. 14 is a sectional view of a door trim, showing a modification of a second embodiment to which an automotive interior component in accordance with the present invention is applied;
FIG. 15 is an explanatory view showing a resin mold portion and a resin rib on the inside surface of an armrest portion in the door trim shown in FIG. 14;
FIG. 16 is a front view showing a conventional door trim;
FIG. 17 is a sectional view taken along the line XVII-XVII of FIG. 16; and
FIG. 18 is an explanatory view showing a molding die used for a molding method for a conventional door trim.

### DETAILED DESCRIPTION OF THE PREFERRED EMBODIMENTS

Preferred embodiments of an automotive interior component and a method for manufacturing the same in accordance with the present invention will be described by taking an automotive door trim and a method for manufacturing the same as examples.

### [Example 1]

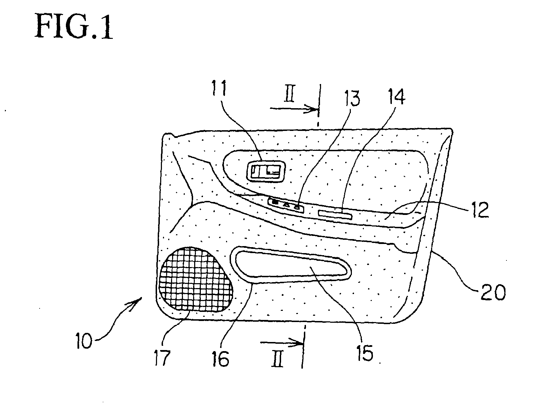

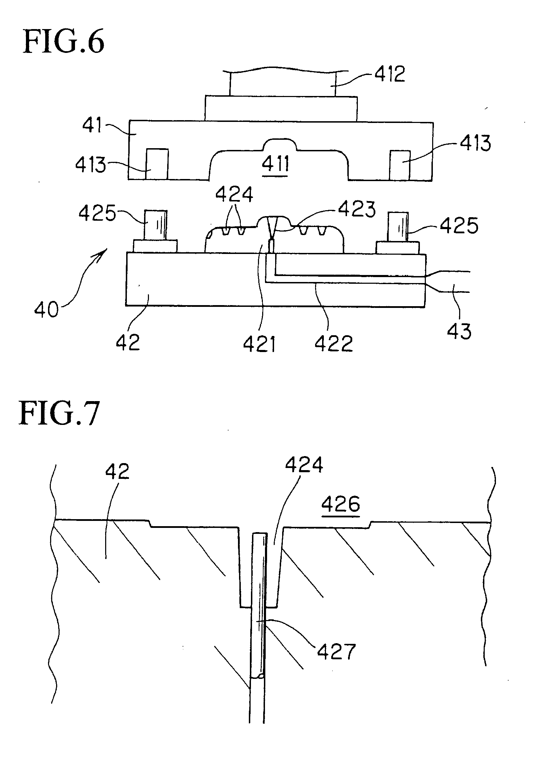

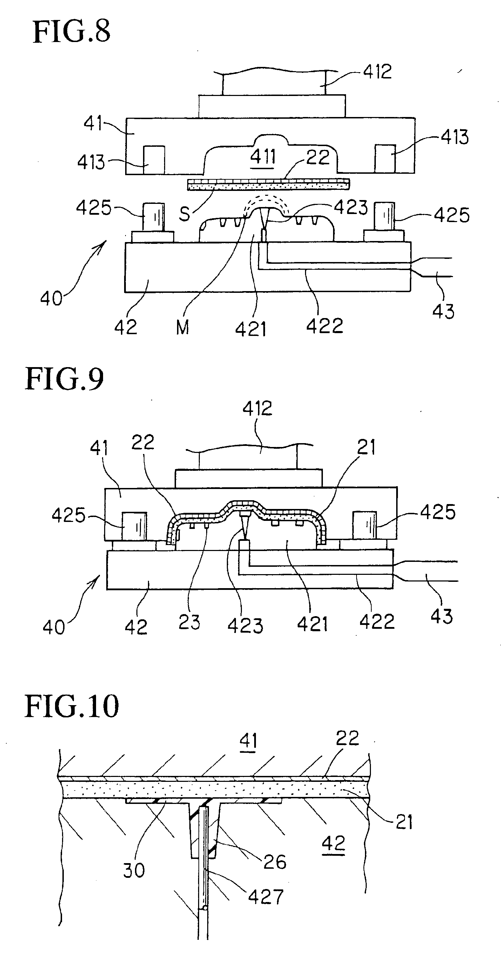

FIGS. 1 to 10 show a first embodiment of the present invention. FIG. 1 is a front view of an automotive door trim, FIG. 2 is a sectional view showing a construction of the automotive door trim, FIG. 3 is an explanatory view showing an arrangement pattern of a resin rib in the automotive door trim, FIG. 4 is an explanatory view showing a clip mounting seat and a reinforcing flash portion formed around a resin mold portion such as a boss in the automotive door trim, FIG. 5 is a sectional view showing a principal portion in the automotive door trim, FIGS. 6 and 7 are a general view and a sectional view of a principal portion, respectively, showing a molding die used for molding the automotive door trim, and FIGS. 8 to 10 are explanatory views showing processes of a manufacturing method for the automotive door trim.

First, a construction of an automotive door trim 10 will be explained with reference to FIGS. 1 to 5. An automotive door trim 10 of this embodiment is constructed by mounting various types of functional components on a door trim main body 20. Specifically, as the functional component, an inside handle escutcheon 11 is installed in an intermediate portion of the door trim main body 20. Also, in an armrest portion 12 of the door trim main body 20, a power window switch unit 13 and a pull handle escutcheon 14 are mounted. Further, at the periphery of a pocket opening 15 located under the armrest portion 12, a pocket escutcheon 16 is fitted and fixed, and on the front side of the pocket opening 15, a speaker grill 17 is provided integrally with or separately from the door trim main body 20. More specifically, as shown in FIGS. 2 to 5, the door trim main body 20 is formed in a desired shape, and is substantially made up of a foamed resin base material 21 having a light weight and shape holding properties, a surface skin member having ornamental function 22 laminated on the surface of the foamed resin base material 21, and a resin mold portion 23 integrated with a part of the back surface of the foamed resin base material 21. Reference numeral 18 denotes a door panel.

More specifically, the foamed resin base material 21 is thermally molded into a desired shape, for example, cold press molded by a molding die having a desired die surface after a foamed resin sheet has been softened by heat so as to have shape holding properties. Further, for a part having high rate of expansion , the foamed resin base material 21 may be formed by vacuum molding. The foamed resin sheet has a construction in which a foaming agent is added to a general-purpose thermoplastic resin. As the thermoplastic resin, polyethylene resins, polypropylene resins, polystyrene resins, polyethylene terephthalate resins, polyvinyl alcohol resins, vinyl chloride resins, polyamide resins, polyacetal resins, polycarbonate resins, ionomer resins, acrylonitrile-butadiene-styrene (ABS) resins, or the like can be used. As the foaming agent, an organic foaming agent such as azodicarbonamide or an inorganic foaming agent such as sodium bicarbonate can be used. In this embodiment, a foamed resin sheet in which sodium bicarbonate is appropriately added as a foaming agent to a polypropylene resin is used. Also, the expansion ratio of the foamed resin base material 21 is set at 2 to 10 times, and the thickness thereof is set in the range of 0.5 to 30 mm, especially 1 to 10 mm.

Further, since the foamed resin base material 21 has a porous construction, the door trimmain body 20 has outstanding sound absorbing properties, so that noise in the cabin can be reduced. Also, in order to maintain the sound absorbing properties of the foamed resin base material 21, the surface skin member having ornamental function 22, which is formed by being laminated in advance on the surface of the foamed resin base material 21 or by being made integral with the foamed resin base material 21 at the time of molding, is preferably a fabric sheet having air permeability such as a woven fabric, a nonwoven fabric, or a braided fabric. As the surface skin member having ornamental function 22, in addition to the fabric sheet such as a woven fabric, a nonwoven fabric, or a braided fabric, a synthetic resin sheet such as a PVC sheet, a TPO sheet, or a TPU sheet, a synthetic resin film, or a single sheet such as a foamed body or a network body can be used. Also, a laminated sheet material can be used in which the back surface of a synthetic resin sheet or a fabric sheet is lined with a cushioning layer such as polyethylene foam, polypropylene foam, or polyurethane foam. The use of the TPO sheet is advantageous in terms of recycling because all the materials are unified by an olefin resin material.

The resin mold portion 23, which has a lightening construction, is integrated with a part of the back surface of the foamed resin base material 21. For example, a resin rib 24 provided to reinforce the rigidity of the foamed resin base material 21, a clip mounting seat 25 for supporting a panel mounting clip, a boss 26, a not illustrated bracket for attaching various types of mounting components, and the like correspond to the resin mold portion 23. The rib 24 is set in a predetermined pattern extending in a cross shape as shown in FIG. 3, and as the pattern, any cross-shaped pattern such as a longitudinal and transverse pattern, a diagonal pattern, or the combination thereof may be selected.

A synthetic resin capable of being usually used preferably as the resin mold portion 23 may be selected appropriately from polyethylene resins, polypropylene resins, polystyrene resins, polyethylene terephthalate resins, polyvinyl alcohol resins, vinyl chloride resins, polyamide resins, polyacetal resins, polycarbonate resins, ionomer resins, acrylonitrile-butadiene-styrene (ABS) resins, and the like. In this embodiment, taking environment and recycling into account, a polypropylene resin is used. Also, a filler such as inorganic fiber, for example, glass fiber or carbon fiber, or inorganic particles, for example, calcium carbonate may be mixed in the thermoplastic resin.

Thus, the door trim main body 20 is made up of the foamed resin base material 21 having shape holding properties, the resin mold portion 23 integrated with a part of the back surface of the foamed resin base material 21, and the surface skin member having ornamental function 22 having decorative properties. Therefore, a resin core member having a heavy weight, which has been used over the whole of a conventional product, can be eliminated, and the lightweight foamed resin base material 21 is used, so that the weight of product can be decreased by 40% or more as compared with the conventional embodiment, and the resin material can be saved significantly, which contributes to the reduction in cost.

Further, in the automotive door trim 10 in accordance with the present invention, as shown in FIGs . 4 and 5, a thin-wall shaped reinforcing flash portion 3 0 is integrally formed around the clip mounting seat 25 and the boss 26 in the resin mold portion 23. The thickness of the reinforcing flash portion 30, which is indicated by a symbol d in FIG. 5, is set in the range of 0.5 to 1. 0 mm while the thickness of the clip mounting seat 25 and the resin rib 24 is set at about 1.5 to 2.5 mm. If the thickness d of the reinforcing flash portion 30 is smaller than 0.5 mm, a proper support force cannot be provided, and if the thickness d of the reinforcing flash portion 30 exceeds 1.0 mm, the quantity of resin increases and thus the weight becomes heavy, and also longer time for providing resin is required. The reinforcing flash portion 30 has not only a supporting function of increasing the strengths of the clip mounting seat 25 and the boss 26 but also a function of preventing a sharp edge from being formed when the clip mounting seat 25 or the boss 26 is broken, so that the reinforcing flash portion 30 is very effective as safety measures.

Next, a manufacturing method for the above-described door trim 10 will be explained. First, the whole construction of a molding die 40 is explained with reference to FIG. 6, and the construction of a molding die for molding the reinforcing flash portion 30 formed around the resin mold portion 23 is explained with reference to FIG. 7. As shown in FIG. 6, the molding die 40 used for molding the door trim main body 20 of the door trim 10 is substantially made up of a forming upper die 41 movable vertically with a predetermined stroke, a fixed-side forming lower die 42 paired with the forming upper die 41, and an injection device 43 connected to the forming lower die 42. More specifically, the forming upper die 41 is formed with a cavity portion 411 having a shape coinciding with the product shape, and is driven vertically with the predetermined stroke by an elevating cylinder 412 connected to the top surface of the forming upper die 41. At four corners of the forming upper die 41, guide bushes 413 are provided so as to serve as a guide mechanism.

On the other hand, the forming lower die 42 is provided with a core portion 421 corresponding to the cavity portion 411 in the forming upper die 41. A manifold 422 and a gate 423 are provided to supply molten resin to the die surface of the core portion 421. Molten resin M supplied from the injection device 43 through a resin passage of the manifold 422 and the gate 423 is fed to a concave portion 424 in the top surface of the core portion 421. The concave portion 424 is drillingly formed so as to coincide with the shape of the resin rib 24, the clip mounting seat 25, the boss 26, the not illustrated bracket, and the like. Also, at four corners of the forming lower die 42, guide posts 425 are projectingly provided so as to serve as the guide mechanism. The guide posts 425 are guided into the guide bushes 413 when the molding upper and lower dies 41 and 42 are closed, by which the press posture of the forming upper die 41 can be maintained properly. As shown in FIG. 7, around the concave portion 424 formed in the die surface of the forming lower die 42, a shallow concave portion 426 is further formed. To form the reinforcing flash portion 30, the shallow concave portion 426 need not necessarily be provided. A construction for degrading the sealing ability of a corner edge 424a of the concave portion 424 also can form the reinforcing flash portion 30. Reference numeral 427 in FIG. 7 denotes an insert pin for forming a boss hole.

Next, a manufacturing process for molding the door trim main body 20 using this molding die 40 will be explained. First, a material formed by laminating the surface skin member having ornamental function 22 on one side of a foamed resin sheet (raw material sheet) S, which is a raw material for the foamed resin base material 21, is softened by heat using a heater device (not shown). In this embodiment, as the foamed resin sheet S, a foamed polypropylene sheet (manufactured by Sumika Plastech Co., Ltd., trade name: Sumiceller Foamed PP sheet, expansion ratio = 3 times, thickness = 3 mm) is used. The foamed resin sheet S (laminated with the surface skin member having ornamental function 22) having been softened by heat is charged into the molding die 40 (refer to FIG. 8).

After the foamed resin sheet S has been set, the forming upper die 41 is lowered by the predetermined stroke by the drive of the elevating cylinder 412 to the forming upper die 41, so that, as shown in FIG. 9, the molding upper and lower dies 41 and 42 are closed, and thereby the foamed resin sheet S is shaped along a desired die surface shape and the foamed resin base material 21 is formed into a required shape. The molten resin M is supplied into the concave portion 424 from the injection device 43 through the manifold 422 and the gate 423, by which the resin mold portion 23 is integrated with a part of the back surface of the foamed resin base material 21. At this time, as shown in FIG. 10, the reinforcing flash portion 30 is integrated, for example, around the boss 26 by supplying the molten resin M into the shallow concave portion 426 of the mold die 40. In this molding process for molding the resin mold portion 23 and the reinforcing flash portion 30, for example, the molten resin M is charged into the shallow concave portion 426 after being first charged into the concave portion 424. Since variations in supply amount of molten resin can be accommodated by the reinforcing flash portion 30, there is no fear of producing a short shot in the resin mold portion 23, by which the molding accuracy can be increased.

Conventionally, the formation of flash has been a serious drawback relating to short shot and material loss. In the present invention, however, a flash is produced forcedly to provide a reinforcing function and a side collision safety function. In addition, the sealing construction of die need not be controlled severely, and the sealing function of the corner edge 424a of the concave portion 424 may be controlled in a relatively rough manner, which offers an advantage that the process control can be carried out easily. In this embodiment, the foamed resin base material 21 is formed by closing the molding upper and lower dies 41 and 42, and molten resin is injection charged into the concave portion 424 in the molding die 40 to integrate the resin mold portion 23 on the inside surface side of the foamed resin base material 21. However, a process can be conducted in which the foamed resin base material 21 is formed in advance, and the formed foamed resin base material 21 is set in the molding die, by which the foamed resin base material 21 is integrated with the resin mold portion 23 by injection molding.

### [Example 2]

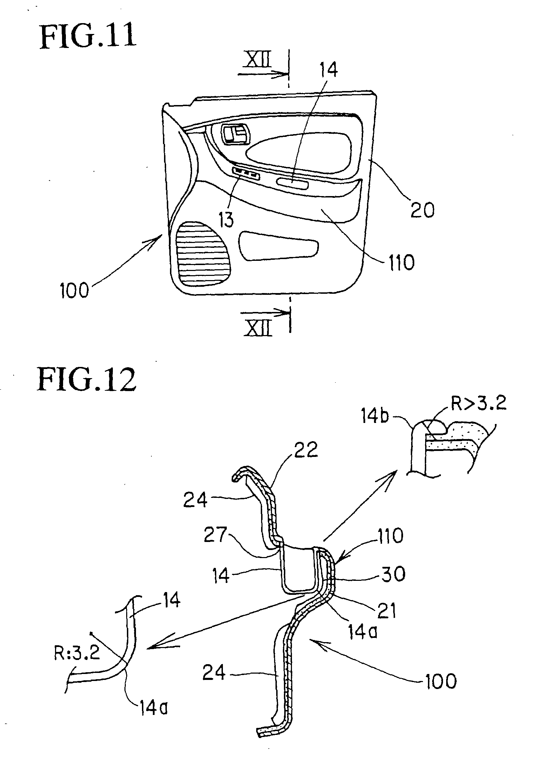

FIGS. 11 to 13 show a second embodiment of the present invention. In the second embodiment as well, the present invention is applied to an automotive door trim 100. For the automotive door trim 100, the door trim main body 20 that is light in weight and low in cost is used. In particular, the automotive door trim 100 features the construction of mounting portions for functional components such as the power window switch unit 13 and the pull handle escutcheon 14 attached to the armrest portion 12. Specifically, as shown in FIG. 12, the pull handle escutcheon 14 is housed and fixed in a mounting opening 27 formed in an armrest portion 110 of the door trim main body 20. In the case where a shock is applied to the door trim 100 from the outside, for example, due to side collision, when the passenger comes into contact with the product surface of the door trim 100, a corner edge 14a of the pull handle escutcheon 14 may break through the inside surface of the door trimmain body 20. In the second embodiment, however, the reinforcing flash portion 30 with a thickness of 0.5 to 1.0 mm is forcedly formed on the inside surface of the foamed resin base material 21, which corresponds to the armrest portion 110, by which buffering action against the corner edge 14a of the pull handle escutcheon 14 can be achieved. Also, the radii of corner edges 14a and 14b of the pull handle escutcheon 14 are set at 3.2 mm or larger so that no problem occurs even if the corner edges interfere with the passenger.

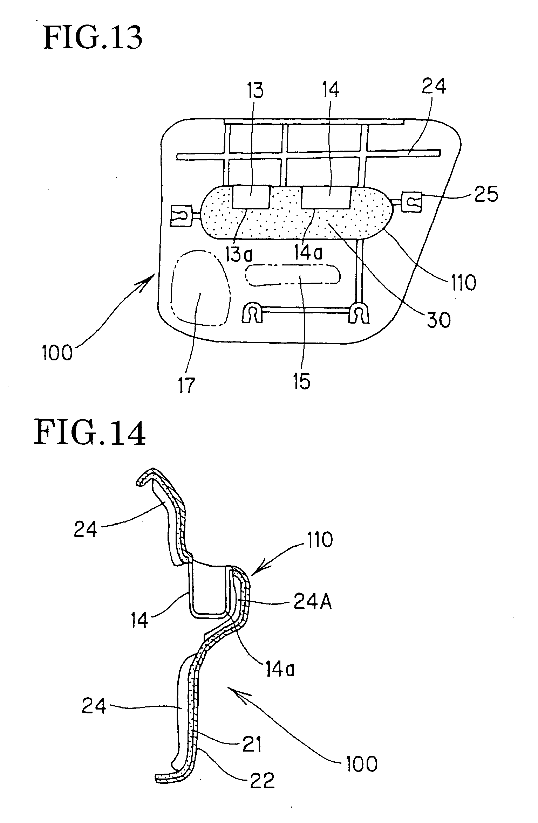

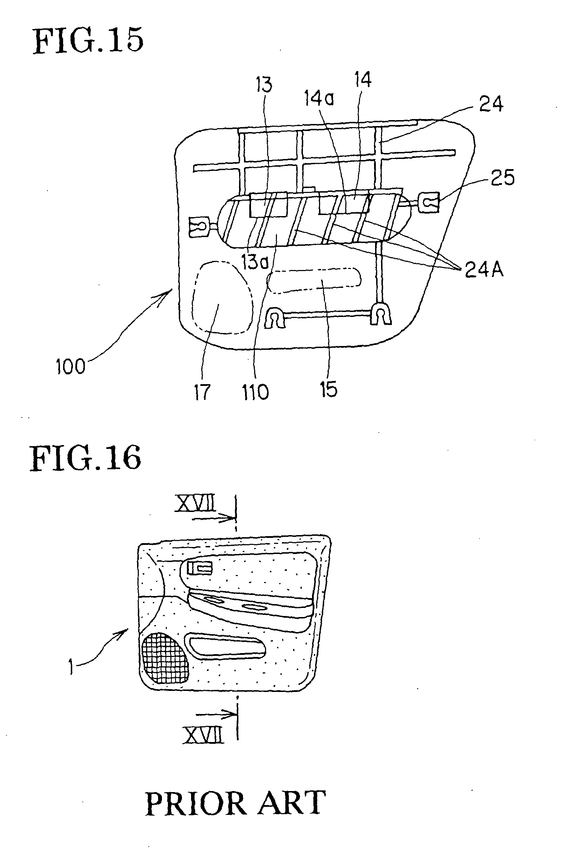

Similarly, FIGS. 14 and 15 show a modification of the second embodiment. In this modification as well, the buffering action against the corner edge 14a of the pull handle escutcheon 14 is provided on the armrest portion 110 of the door trim main body 20. On the inside surface of the foamed resin base material 21, which corresponds to the armrest portion 110, three resin ribs 24A are formed in the direction such as to substantially intersect with the edge line of the corner edge 14a of the pull handle escutcheon 14. For example, if the passenger strikes the armrest portion 110 at the time of side collision, the corner edge 14a of the pull handle escutcheon 14 is received by the resin ribs 24A, so that there is no fear that the corner edge 14a breaks through the door trim 100, which provides a construction in which safety is taken into account.

Thus, in the second embodiment as well, the door trim main body 20 is made up of the foamed resin base material 21 and the resin mold portion 23, and has a construction that is light in weight and low in cost. Also, the inside surface of the armrest portion 110 of the door trim 100 employs a construction such as to face to corner edges 13a and 14a of the power window switch unit 13 and the pull handle escutcheon 14 by means of the reinforcing flash portion 30 or the resin ribs 24A. Therefore, at the time of side collision, the corner edges 13a and 14a of the power window switch unit 13 and the pull handle escutcheon 14 do not interfere with the passenger, so that this construction is favorable in terms of safety.

Although the door trim 10, 100 using the door trim main body 20 consisting of a laminated body of the foamed resin base material 21 and the resin mold portion 23 is used in embodiments 1 and 2, like a two tone type door trim, the construction of interior trim main body in accordance with the present invention can be adopted for either one of door trim upper and door trim lower.

Further, regarding the application, the present invention can be applied to all interior components, such as a rear parcel shelf, a floor trim, a luggage trim, a trunk trim, a rear side trim, and a roof trim, besides the door trim. In particular, the present invention should be applied to the door trim and interior components mounted on the side panel of vehicle because of its high safety performance at the time of side collision.

## Claims

1. An automotive interior component comprising an interior trim main body (20) consisting of a foamed resin base material (21), which is formed into a required shape and has a light weight and shape holding properties; and a resin mold portion (23), which is integrated with a part of the back surface of the foamed resin base material (21), wherein
the resin mold portion (23) of the interior trim main body (20) is integrated with the back surface of foamed resin base material (21) by injection and charging molten resin (M) into a concave portion (424) in a forming lower die (42), and a thin reinforcing flash portion (30) is formed at least in a part around the resin mold portion (23) by leaking the molten resin (M) to the outside intentionally and forcedly.

2. The automotive interior component according to claim 1, wherein the resin mold portion (23) is set into a shape intersecting in a lattice shape, and includes at least a resin rib (24) having a reinforcing function, a clip mounting seat (25) for holding a clip for mounting the interior component to a vehicle body panel, and a reinforcing or panel-connecting boss (26) connected to a part of the resin rib (24).

3. An automotive interior component (10) comprising an interior trim main body (20) consisting of a foamed resin base material (21), which is formed into a required shape and has a light weight and shape holding properties; a resin mold portion (23), which is integrated with a part of the back surf ace of the foamed resin base material (21); and a functional component (13, 14), which is mounted on an interior trim main body (20), wherein
the functional component (13, 14) is housed and fixed in a mounting opening (27) in the interior trim main body (20), and a resin rib (24A) substantially intersecting with an edge line of a corner edge (13a, 14a) of the functional component (13, 14) is formed on the inside surface side of the foamed resin base material (21) so as to correspond to the corner edge(13a, 14a).

4. An automotive interior component (10) comprising an interior trim main body (20) consisting of a foamed resin base material (21), which is formed into a required shape and has a light weight and shape holding properties; a resin mold portion (23), which is integrated with a part of the back surface of the foamed resin base material (21); and a functional component (13, 14), which is mounted on an interior trim main body (20), wherein
the functional component (13, 14) is housed and fixed in a mounting opening (27) in the interior trim main body (20), and a thin reinforcing flash portion (30) that receives an edge line of a corner edge (13a, 14a) of the functional component (13, 14) is formed on the inside surface side of the foamed resin base material (21) so as to correspond to the corner edge (13a, 14a) by intentionally and forcedly exposing molten resin (M) to the outside.

5. The automotive interior component according to claim 4, wherein a resin rib (24A) substantially intersecting with the corner edge (13a, 14a) of the functional component (13, 14) is formed on the inside surface side of the foamed resin base material (21)being connected with the reinforcing flash portion (30) so as to correspond to the corner edge (13a, 14a) of the functional component (13, 14).

6. The automotive interior component according to any one of claims 1 to 5, wherein the thickness of the resin mold portion (23) is set at 1.5 to 2.5 mm, and the thickness of the reinforcing flash portion (30) is set at 0.5 to 1.0 mm.

7. A method for manufacturing an automotive interior component comprising an interior trim main body (20) consisting of a foamed resin base material (21), which is formed into a required shape and has a light weight and shape holding properties, and a resin mold portion (23), which is integrated with a part of the back surface of the foamed resin base material (21), wherein
a raw material sheet (S), which is a raw material for the foamed resin base material (21), is provided between molding upper and lower dies (41, 42) in an open state after being softened by heat, and the molding upper and lower dies (41, 42) is clamped to mold the foamed resin base material (21) into a required shape along a cavity shape; molten resin (M) is injection charged into a concave portion (424) in the molding dies (41, 42) just before the molding upper and lower dies (41, 42) is closed or after the molding upper and lower dies (41, 42) has been closed to integrate the resin mold portion (23) with the inside surface of the foamed resin base material (21); and the molten resin (M) is leaked to the outside intentionally and forcedly to form a thin plate shaped reinforcing flash portion (30) at least in a part around the resin mold portion (23) in connect with the base part of the resin mold portion (23).

8. The method for manufacturing an automotive interior component according to claim 7, wherein when the molten resin (M) is charged into the concave portion (424) in the molding die (40), the molten resin (M) is leaked to the outside intentionally and forcedly, by which a molding defective such as a short shot caused when the molten resin (M) is charged into the concave portion (424) can be avoided, and variations in supply of the molten resin (M) can be accommodated.

9. The manufacturing method for an automotive interior component according to claim 7, wherein a sealing construction between the edge of the concave portion (424) and a foamed resin sheet (S) is configured so that when the molten resin (M) is injection charged into the concave portion (424) in the forming lower die (42), regarding the leakage of resin due to a decrease in sealing ability, sealing control is carried out easily by providing the reinforcing flash portion (30).
